# EUROPÄISCHE PATENTANMELDUNG

(11) **EP 2 207 097 A1**
(43) Veröffentlichungstag der Anmeldung: **14.07.2010**
(21) Anmeldenummer: 09177067.7
(22) Anmeldetag: 25.11.2009
(51) Int. Cl.: G06F 11/16

(54) **Verfahren und Vorrichtung zum Betreiben eines Steuergerätes**

(30) Priorität: 07.01.2009 DE 102009000045
(71) Anmelder: Robert Bosch GmbH, 70442 Stuttgart (DE)
(72) Erfinder: Mueller, Bernd, 71229, Leonberg (DE); Ferch, Markus, 71723, Grossbottwar (DE); Collani, Yorck, 71717, Beilstein (DE); Banski, Holger, Santa Clara, CA 95054 (US)

(57) **Zusammenfassung**

Die Erfindung betrifft eine Vorrichtung zum Betreiben eines Steuergerätes, insbesondere in einem Kraftfahrzeug, mit einem Rechnersystems, welches zwei Paare (100, 200) mit jeweils zwei Ausführungseinheiten (110, 120; 210 220) aufweist, wobei die zwei Ausführungseinheiten (110, 210; 210 220) jedes Paares (100, 200) ein gleiches Programm abarbeiten und die Ausgangssignale jeder Ausführungseinheit (110, 120; 210 220) eines Paares (100, 200) durch je eine Vergleichseinheit (130, 230) miteinander verglichen werden, wobei beim Auftreten einer Abweichung der Ausgangssignale der Ausführungseinheiten (110, 120; 210 220) eines Paares (100, 200) von der Vergleichseinheit (130, 230) ein Fehlersignal ausgegeben wird.

Bei einer Vorrichtung, bei welcher die Fahrt des Fahrzeuges auch in einem Fehlerfall fortgesetzt werden darf, sind Mittel (130, 230, 300, 310,400, 500) vorhanden, die beim Auftreten des Fehlersignals für ein erstes Paar (100) von Ausführungseinheiten (110, 120), dieses abschaltet und das Rechnersystem mit dem zweiten Paar (200) von Ausführungseinheiten (210, 220) weiter betreibt, wobei an den Fahrer ein Vorwarnsignal ausgegeben wird.

## Beschreibung

### Stand der Technik

Die Erfindung betrifft ein Verfahren zum Betreiben eines Steuergerätes in einem Kraftfahrzeug mit einem Rechnersystem, welches zwei Paare mit jeweils zwei Ausführungseinheiten aufweist, wobei die zwei Ausführungseinheiten ein gleiches Programm abarbeiten und die Ausgangssignale der Ausführungseinheiten eines Paares miteinander verglichen werden, wobei beim Auftreten einer Abweichung der Ausgangssignale der Ausführungseinheiten eines Paares ein Fehlersignal ausgegeben wird sowie eine Vorrichtung zur Durchführung des Verfahrens.

Eine gattungsgemäße Vorrichtung ist aus der WO 2007/017381 A1 bekannt. Die Vorrichtung umfasst ein Multiprozessorsystem mit vier Ausführungseinheiten, wobei immer zwei Ausführungseinheiten gleiche Aufgaben und Prozesse abarbeiten. Mittels einer Vergleichseinheit werden die von jeweils zwei Ausführungseinheiten, die dieselben Programme abarbeiten, ausgegebenen Ausgangssignale verglichen und bei einer Abweichung dieser beiden Ausgangssignale voneinander ein Fehlersignal ausgegeben. Dieser als Lockstep Modus bezeichnete Fall kommt hauptsächlich in solchen Anwendungen mit hohen Fehlererkennungsanforderungen, z. B. sicherheitsrelevanten Anwendungen zum Einsatz.

In nahezu allen automobilen Zuständen gilt im Fehlerfall das Abschalten eines Steuergerätes als der sicherste Zustand. Wird ein Steuergerät abgeschaltet, wird der Fahrer darüber informiert, da nach dem Abschalten des Steuergerätes die Fahrt des Fahrzeuges nicht fortgesetzt werden darf, sofern das Steuergerät Voraussetzung für den Betrieb des Fahrzeuges ist (z. B. Motorsteuerung, Lenkung usw.).

### Offenbarung der Erfindung

Der Erfindung liegt die Aufgabe zugrunde, ein Verfahren und eine Vorrichtung zum Betreiben eines Steuergerätes anzugeben, bei welchem die Fahrt des Fahrzeuges auch in einem Fehlerfall fortgesetzt werden darf.

Ein Verfahren zum Betreiben eines Steuergerätes mit den Merkmalen des Patentanspruchs 1 hat den Vorteil, dass der Fahrer seine Fahrt uneingeschränkt fortsetzen kann. Dadurch, dass beim Auftreten des Fehlersignals für ein erstes Paar von Ausführungseinheiten, dieses abgeschaltet und das Rechnersystem mit dem zweiten Paar von Ausführungseinheiten weiterbetrieben wird, wobei an den Fahrer ein Vorwarnsignal ausgegeben wird, bleibt die Kernfunktion des Steuergerätes erhalten, während der Fahrer nur eine Warnung erhält. Dieses Verfahren ist vorteilhaft immer dann einsetzbar, wenn die beiden Paare so genannte "Lockstep-Paare" sind, was bedeutet, dass immer zwei Ausführungseinheiten eines Paares ein und dieselben Programmschritte abarbeiten, wobei die Ausgangssignalen von den beiden Ausführungseinheiten, die ein Paar bilden, verglichen werden. Die Verkopplung von jeweils zwei Ausführungseinheiten eines Paares kann dabei mittels eines Taktversatzes oder asynchron realisiert werden, was beim Vergleich mit berücksichtigt wird.
Zur Absicherung sind keine weiteren Maßnahmen erforderlich, da die normativen Anforderungen durch das verbleibende, noch aktive Lockstep-Paar immer noch erfüllt werden. Auf eine Reduzierung der Geschwindigkeit kann beispielsweise verzichtet werden.

IN einer Ausgestaltung wird erst beim Auftreten von Fehlersignalen von beiden Paaren der Ausführungseinheiten das Rechnersystem abgeschaltet und an den Fahrer ein Warnsignal in optischer und /oder akustischer Form ausgegeben. Der Fahrer muss den Fahrbetrieb des Fahrzeuges sofort einstellen, da die Sicherheit des Fahrzeuges nicht mehr gewährleistet ist. Somit wird eine zweistufige Fehlersignalisierung ermöglicht. Der Fahrer erhält ein Vorwarnsignal bei Ausfall eines Paares von Ausführungseinheiten. Sind beide Paare defekt, wird ein Warnsignal ausgegeben.

Vorteilhafterweise wird das Vorwarnsignal während des gesamten weiteren Betriebs des Rechnersystems mit dem zweiten, noch aktiven Paar von Ausführungseinheiten ausgegeben. Somit wird dem Fahrer während des gesamten restlichen Fahrzyklusses signalisiert, dass in dem Steuergerät ein sicherheitsrelevanter Fehler vorliegt. Der Fahrer wird somit veranlasst frühzeitig eine Werkstatt aufzusuchen, um den Fehler beseitigen zu lassen.

In eine Ausgestaltung wird das zweite, noch aktive Paar von Ausführungseinheiten über den Fehler im ersten Paar der Ausführungseinheiten informiert, wobei das zweite Paar von Ausführungseinheiten die Ausgabe des Vorwarnsignals initiiert. Es besteht die Möglichkeit, dass das zweite Paar der Ausführungseinheiten auf verschiedene Einheiten des Rechnersystems zugreifen kann, wodurch Signaleinrichtungen genutzt werden könne, die bereits im Fahrzeug vorhanden sind und während des Fahrbetriebes nicht benötigt werden.

In einer Weiterbildung wird das erste Paar von Ausführungseinheiten nach Feststellung des Fehlers getestet und die Ausgabe des Vorwarnsignals an den Fahrer erfolgt erst, wenn das erste Paar von Ausführungseinheiten nach der Bestätigung des Fehlers abgeschaltet wurde. Dies hat den Vorteil, dass die Signalisierung des Fehlers erst dann an den Fahrer erfolgt, wenn sichergestellt ist, dass wirklich ein Hardwarefehler vorliegt und das erste Paar der Ausführungseinheiten abgeschaltet werden muss. Transiente Fehler, welche die Ausführungseinheiten durch EMV-Einflüsse, radioaktive oder kosmische Strahlung beeinflussen, führen nicht zu einer Fehlersignalisierung, da sie keine dauerhaften Schäden hinterlassen und nur sporadisch auftreten.

Vorteilhafterweise wird das Auftreten des Fehlersignals gezählt und das Vorwarnsignal erst ausgegeben, wenn eine vorgegebene Anzahl von Fehlersignalen ermittelt wurde. Somit wird nicht sofort beim ersten Auftreten eines Fehlersignals eine Signalisierung angestoßen, da in diesem Fall nicht sicher ist, ob es sich auch wirklich um einen dauerhaften Fehler handelt. So kann das Paar, welches unter der Einwirkung von transienten Fehlern steht, nach Wegfall der transienten Fehler wieder seinen normalen Bearbeitungszustand einnehmen. Eine Beunruhigung des Fahrers durch eine vorzeitige Fehleranzeige wird somit unterbunden. In einer Ausgestaltung wird das Fehlersignal abgespeichert, wobei bei einem Neustart des Rechnersystems das erste Paar von Ausführungseinheiten getestet wird und beim Ausbleiben des Fehlersignals das Vorwarnsignal unterdrückt wird. Ein Neustart des Rechnersystems erfolgt normalerweise beim Start des Motors des Fahrzeuges und somit bei einem neuen Fahrzyklus. Nach einer Regenerierung des abgeschalteten Paares an Ausführungseinheiten während des Fahrzeugstillstandes oder eines Fahrzeugresets, kann auf die Warnung des Fahrers verzichtet werden.

In einer Weiterbildung wird, wenn die Anzahl der abgespeicherten Fehlersignale einen bestimmten Wert überschreiten, das Rechnersystem trotz korrekter Arbeitsweise des zweiten Paares von Ausführungseinheiten abgeschaltet. Die abgespeicherten Fehlersignale geben einen Hinweis auf die Störanfälligkeit des Rechnersystems. Wird ein bestimmtes Maß an Störungen registriert, muss das Steuergerät in einer Werkstatt auf eventuell sporadisch auftretende Hardwarefehler untersucht werden, um einen dauerhaften Betriebsausfall der beiden Paare von Ausführungseinheiten zu unterbinden.

In einer weiteren Weiterbildung weist eine Vorrichtung zum Betreiben eines Steuergerätes in einem Kraftfahrzeug ein Rechnersystem auf, welches zwei Paare mit jeweils zwei Ausführungseinheiten umfasst, wobei die zwei Ausführungseinheiten jedes Paares ein gleiches Programm abarbeiten und die Ausgangssignale jeder Ausführungseinheit eines Paares durch je eine Vergleichseinheit miteinander verglichen werden, wobei beim Auftreten einer Abweichung der Ausgangssignale der Ausführungseinheiten eines Paares von der Vergleichseinheit ein Fehlersignal ausgegeben wird. Bei einer Vorrichtung, bei welcher die Fahrt des Fahrzeuges auch in einem Fehlerfall fortgesetzt werden darf, sind Mittel vorhanden, die beim Auftreten des Fehlersignals für ein erstes Paar von Ausführungseinheiten, dieses abschaltet und das Rechnersystem mit dem zweiten Paar von Ausführungseinheiten weiter betreibt, wobei an den Fahrer ein Vorwarnsignal ausgegeben wird. Obwohl die volle Funktionsfähigkeit des Rechnersystems durch das Vorhandensein des zweiten Paares an Ausführungseinheiten, die jetzt zusätzlich mindestens einen Teil der Programme der Ausführungseinheiten des ersten Paares abarbeiten, zuverlässig gewährleistet ist, wird dem Fahrer auch Sicherheitsgründen der Schaden des ersten Paares der Ausführungseinheiten angezeigt.
Vorteilhafterweise sind die Vergleichseinheiten mit einer Signaleinrichtung verbunden, welche bei Ausgabe des Fehlersignals durch die Vergleichseinheit aktiviert wird, welche dem defekten Paar von Ausführungseinheiten zugeordnet ist. Dabei wird sofort nach Feststellung des Fehlers der Fahrer informiert, um gegebenenfalls Gegenmaßnahmen einleiten zu können.

In einer Ausgestaltung sind sowohl die Vergleichseinheit des ersten Paares als auch die Vergleichseinheit des zweiten Paares mit einem Halteglied verbunden, welches auf die Signaleinrichtung führt. Über das Halteglied wird die Signaleinrichtung durch das Fehlersignal mindestens einer Vergleichseinheit aktiviert und während des gesamten Fahrzyklusses des Fahrzeuges aufrechterhalten, so dass der Fahrer kontinuierlich über den Fehler informiert wird. Dabei ist ein Halteglied ausreichend, welches von beiden Vergleichseinheiten angesteuert werden kann.

In einer Weiterbildung ist die Signaleinrichtung in einem zweiten Steuergerät enthalten, wobei das erste und das zweite Paar der Ausführungseinheiten über eine Datenleitung mit dem zweiten Steuergerät verbunden sind und das zweite , noch aktive Paar der Ausführungseinheiten nach einer Information über die Ausgabe eines Fehlersignals des ersten Paares ein Signal zur Aktivierung der Signaleinrichtung an das zweite Steuergerät sendet. In diesem Fall erfolgt eine Kommunikation der beiden Steuergeräte, welche im ersten Steuergerät von den zweiten, noch aktiven Paar der Ausführungseinheiten initiiert wird. Die Information des zweiten, noch aktiven Paares der Ausführungseinheiten über den Fehler im ersten Paar der Ausführungseinheiten erfolgt über einen Interrupt oder durch ein zyklisch zu überprüfendes Signal.

Alternativ ist die Signaleinrichtung in einer peripheren Einheit des Rechnersystems angeordnet, welche über die Datenleitung mit dem ersten und dem zweiten Paar von Ausführungseinheiten verbunden ist und das zweite , noch aktive Paar der Ausführungseinheiten nach einer Information über die Ausgabe eines Fehlersignals des ersten Paares ein Signal zur Aktivierung der Signalvorrichtung an die periphere Einheit sendet. Somit können vorteilhafterweise schon im Fahrzeug vorhandene Signaleinrichtungen genutzt werde, welche an anderen Einrichtungen des Rechnersystems angeordnet sind und während des Fahrbetriebs des Fahrzeuges nicht genutzt werden.
In einer Weiterbildung ist eine, einen Zähler enthaltende Speichereinheit mit der Datenleitung verbunden, wobei bei Ausgabe des Fehlersignals durch eine der beiden Vergleichseinheiten den Zähler um einen bestimmten Wert inkrementiert wird und erst beim Erreichen eines vorgegebenen Zählerwertes die Signaleinrichtung durch den Zähler aktiviert wird. Um ein Auftreten von transienten Fehlern auszuschließen und um sicher zu sein, dass ein Hardwarefehler vorliegt, welcher sich permanent wiederholt, wird der Fahrer erst gewarnt, wenn ein vorgegebener Zählerwert erreicht ist.

Vorteilhafterweise ist ein Fehlerspeicher des Steuergerätes über die Datenleitung mit dem ersten und dem zweiten Paar der Ausführungseinheiten verbunden, in welchen bei jeder Aktivierung der Signaleinrichtung ein Eintrag vorgenommen wird. Mittels eines solchen Fehlerspeichers des Steuergerätes wird das Verhalten der beiden Paare von Ausführungseinheiten kontinuierlich registriert und kann jederzeit ausgelesen und interpretiert werden. Diese Fehlereinträge können nur in einer Werkstatt gelöscht werden.

In einer Ausgestaltung wird bei Überschreitung der Anzahl der Fehlereinträge in dem Fehlerspeicher das Steuergerät permanent abgeschaltet. Mit dieser Maßnahme wird sichergestellt, dass nicht mit einem fahruntauglichen Fahrzeug, welches den gegebenen Sicherheitsanforderungen nicht gerecht wird, gefahren wird. Auch wenn nicht eindeutig bekannt ist, welche Fehler zu den Eintragungen in den Fehlerspeicher geführt haben, muss doch davon ausgegangen werden, dass ab einer vorgegebenen Anzahl von Fehlereinträgen, die entweder absolut oder innerhalb eines bestimmten Zeitraumes registriert wurden, die Sicherheit des Fahrzeuges nicht mehr gewährleistet ist.

Die Erfindung lässt zahlreiche Ausführungsformen zu. Eine davon soll anhand der in der Zeichnung dargestellten Figuren näher erläutert werden.

Es zeigt:
- Figur 1:: erstes Ausführungsbeispiel der erfindungsgemäßen Vorrichtung
- Figur 2:: schematischer Programmablaufplan für die Vorrichtung nach Figur 1
- Figur 3:: zweites Ausführungsbeispiel der erfindungsgemäßen Vorrichtung
- Figur 4:: schematisches Ablaufdiagramm für die Vorrichtung nach Figur 3
- Figur 5:: drittes Ausführungsbeispiel der erfindungsgemäßen Vorrichtung
- Figur 6:: viertes Ausführungsbeispiel der erfindungsgemäßen Vorrichtung

Gleiche Merkmale sind mit gleichen Bezugszeichen gekennzeichnet.

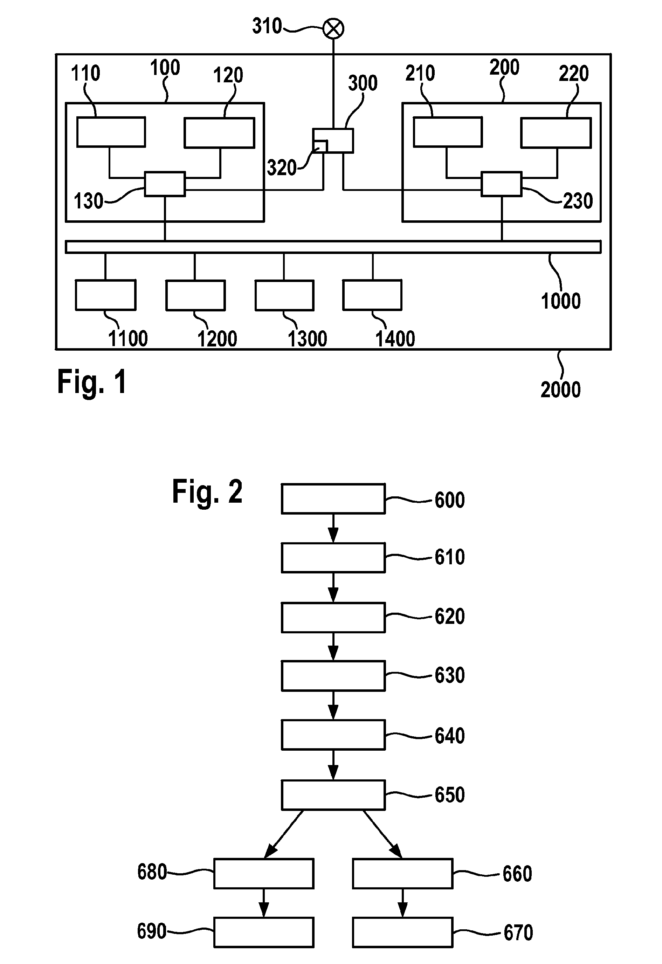

In Figur 1 ist ein Steuergerät 2000 für ein Kraftfahrzeug dargestellt, welches ein Rechnersystem mit vier Recheneinheiten 110, 120, 210 und 220 umfasst. Jeweils zwei Recheneinheiten 110, 120, 210, 220 sind zu einem Paar 100, 200 zusammengefasst. Die Recheneinheiten 110, 120 bilden das Paar 100 und die Recheneinheiten 210, 220 bilden das Paar 200.

Die Recheneinheiten 110, 120 des ersten Paares 100 sind mit einer ersten Vergleichseinheit 130 verbunden, während die Recheneinheiten 210, 220 des zweiten Paares 200 auf eine zweite Vergleichseinheit 230 führen. Die erste 130 und die zweite Vergleichseinheit 230 sind mit einer Kommunikationsleitung 1000 verbunden. An die Kommunikationsleitung 1000 sind ein Speicher 110 sowie weitere periphere Einheiten 1200, 1300 und 1400 angeschlossen.

Die Vergleichseinheiten 130, 230 der beiden Paare 100, 200 sind weiterhin mit einem Halteglied 300 verbunden, welches an eine Warneinrichtung 310 geführt ist. Die Warneinrichtung 310 umfasst dabei zwei Lampen, eine gelbe und eine rote.

Darüber hinaus ist im Halteglied 300 ein Zähler 320 vorhanden, der die Fehlersignale beider Vergleicher 130, 230 registriert. Es können aber auch zwei Zähler vorhanden sein, wobei ein Zähler einer Vergleichseinheit fest zugeordnet ist und deren Fehlersignale zählt.

Die Arbeitsweise dieser Vorrichtung soll mit Hilfe von Figur 2 beschrieben werden. Im Block 600 arbeitet jedes Paar 100, 200 in einem Lockstep-Modus. Das bedeutet, dass die beiden Recheneinheiten 110, 120 bzw. 210, 220 eines Paares 100, 200 gleichzeitig die gleichen Programme abarbeiten, wobei die Vergleichseinheiten 130, 230 jedes Paares 100, 200 die Ausgangssignale der jeweils beiden Recheneinheiten 110, 120; 210, 220 miteinander vergleicht. Bei Abweichungen zwischen den beiden Ausgangssignalen gibt die jeweilige Vergleichseinheit 130, 230 ein Fehlersignal aus. Dieser Modus wird auch als Vergleichsmodus bezeichnet.

Es ist aber auch möglich, dass die Programme, die in den beiden Recheneinheiten 110, 120; 210 220 eines Paares 100, 200 abgearbeitet werden, im Vergleichsmodus einen Taktversatz aufweisen oder selbst asynchron realisiert werden. Ein solcher Taktversatz bzw. eine solche Asynchronität ist der den beiden Recheneinheiten 110, 120 bzw. 210, 220 zugeordneten Vergleichseinheiten 130, 230 bekannt und wird in dieser zurückgestellt, bevor der eigentliche Vergleich stattfindet. Die Vergleichseinheiten 130, 230 können somit Speicher für die Ermöglichung einer Asynchronität enthalten bzw. auch Steuersignale abarbeiten, die mitteilen. Ob ein Vergleich für ein bestimmtes Rechenergebnis durchgeführt werden soll, da nicht alle über die Ausgangssignale kommunizierten Rechenergebnisse im Vergleicher 130, 230 zwingend miteinander verglichen werden müssen

Wurde im Block 610 durch einen Vergleicher 130, 230 ein Vergleichsfehler erkannt, wird durch den Vergleicher 130, 230 ein Signal an das Halteglied 300 ausgegeben. Dabei wird im Block 620 der Zähler 320 inkrementiert. Befindet sich der Zählwert des Zählers 320 unterhalb eines vorgegebenen Wertes, was im Block 630 überprüft wird, arbeitet das Steuergerät 2000 ohne Änderung weiter, wobei der Zählwert des Zählers 320 bei jeder Fehlermeldung um den Wert eins inkrementiert wird. Wird im Block 630 festgestellt, dass der Zählwert den vorgegebenen Wert erreicht oder überschritten hat, wird das Halteglied 300 im Block 640 aktiviert.

Im Block 650 wird geprüft, ob eine Vergleichseinheit 130 oder 230 oder beide Vergleicher 130, 230 ein Fehlersignal an das Halteglied 300 ausgegeben haben. Wird festgestellt, dass das Fehlersignal von nur einem Vergleicher 130, 230 ausgegeben wurde, wird im Block 660 die gelbe Lampe der Warneinrichtung310 aktiviert und das Paar 100, 200 von Recheneinheiten 110, 120 bzw. 210, 220, welches mit der den Fehler anzeigenden Vergleichseinheit 130, 230 verbunden ist, deaktiviert. Die Warnvorrichtung bleibt während des gesamten noch ablaufenden Fahrzyklusses des Kraftfahrzeuges in Betrieb, da das Halteglied 300 das Signal dauerhaft setzt. Mit der gelben Lampe wird dem Fahrer des Kraftfahrzeuges signalisiert, dass ein Fehler aufgetreten ist und er eine Werkstatt aufsuchen soll. Der aktuelle Fahrbetrieb des Kraftfahrzeuges wird aber dadurch nicht beeinträchtigt, da das zweite, noch aktive Paar 100, 200 den Betriebsablauf entweder in eingeschränkter Funktionalität oder nach einem fehlerfreien Test des noch aktiven Paares 100, 200 mit voller Funktionalität weiterhin gewährleistet (Block 670).

Wird allerdings im Block 650 festgestellt, das beide Vergleicher 130, 230 eine Fehlermeldung ausgegeben haben, wird im Block 680 die rote Lampe der Warneinrichtung 310 in Betrieb genommen. Das Steuergerät 2000 wird in diesem Fall abgeschaltet und der Fahrer muss aus Sicherheitserwägungen im Block 690 den Fahrbetrieb einstellen.

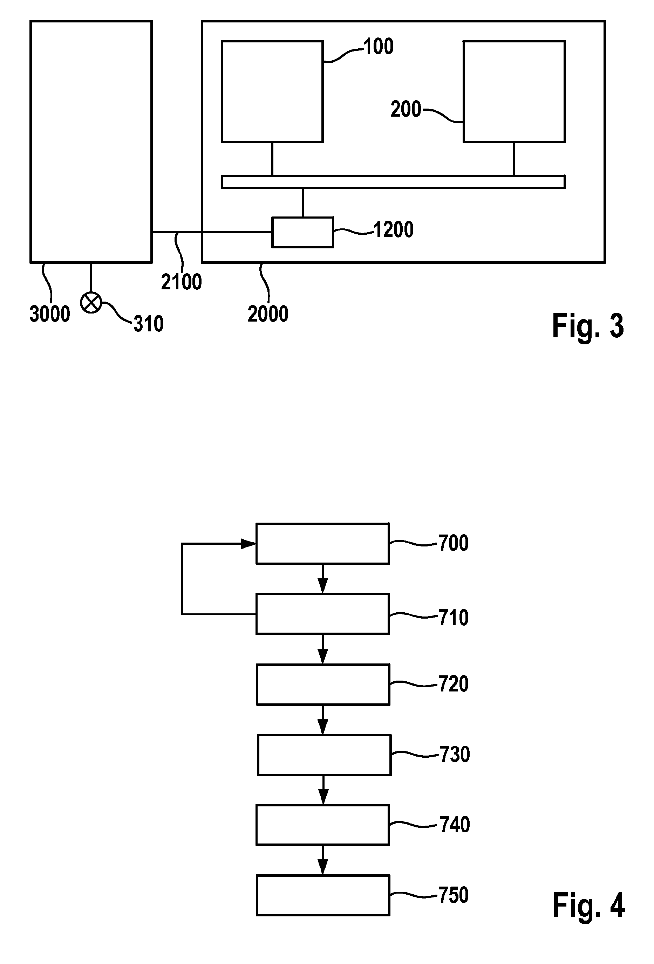

Figur 3 zeigt ein verändertes Ausführungsbeispiel. Wie in Figur 1 umfasst das Steuergerät 2000 zwei Paare 100, 200 mit jeweils zwei Recheneinheiten, welche nicht weiter dargestellt sind. Die beiden Paare 100, 200 führen an die interne Kommunikationsleitung 1000, welche über eine Schnittstelle 1200 mit einem fahrzeuginternen CAN-Bus 2100 verbunden ist. Über den CAN-Bus 2100 kommuniziert das Steuergerät 2000 mit einem weiteren Steuergerät 3000, welches die Warneinrichtung 310 aufweist.

Gemäß Figur 4 arbeiten im Block 700 die beiden Paare 100 und 200 im Vergleichsmodus, wie er bereits beschrieben wurde. Im Block 710 wird von dem Paar 100, 200, für einen Fehler erkannt wurde, über die Kommunikationsleitung 1000 ein Signal an das zweite, fehlerfrei arbeitende Paar 100, 200 ausgegeben. Dieses Paar 100, 200 erkennt, dass das erste Paar 100, 200 einen Fehler ausweist. Im Block 720 wird eine Hardwareprüfung des fehlerbehafteten Paares 100 von Recheneinheiten 110, 120 in Form eines Selbsttestes ausgelöst. Erkennt die Hardwareprüfung einen Fehler, wird im Block 730 das fehlerhafte Paar 100 abgeschaltet. Erst nach Abschaltung des fehlerbehafteten Paares wird im Block 740 dadurch das zweite Paar 200 über die Kommunikationsleitung 1000, die Schnittstelle 1200 und den CAN-Bus 2100 ein Signal an die zweite Steuereinheit 3000 ausgegeben. Nach Empfang des Signals im Block 750 aktiviert das Steuergerät 3000 die gelbe Lampe der Warneinrichtung 310.

Wird im Block 720 kein Fehler erkannt, kehrt das Rechnersystem wieder zum Vergleichsmodus zurück, wie er im Block 700 durchgeführt wird.

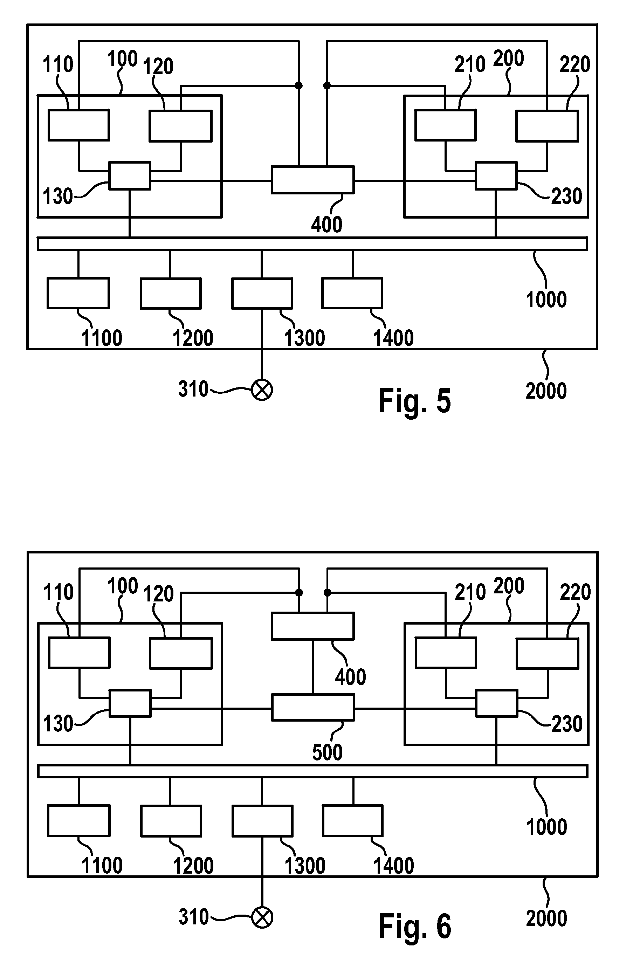

Möglichkeiten, wie innerhalb des Steuergerätes 2000 den Paaren 100, 200 von Recheneinheiten 110, 120 bzw. 210, 220 mitgeteilt werden kann, dass ein Paar 100, 200 fehlerhaft arbeitet, sind in Figur 5 und 6 dargestellt.

In Figur 5 sind die beiden Vergleicher 130, 230 jedes Paares 100, 200 von Recheneinheiten 110, 120; 210, 220 mit einem Interruptcontroller 400 verbunden, welcher sowohl mit den Recheneinheiten 110 und 120 des Paares 100 als auch mit den Recheneinheiten 210 und 220 des Paares 200 verbunden ist. Stellt beispielsweise der Vergleicher 130 des Paares 100 einen Fehler in den Abläufen der Recheneinheiten 110 bzw. 120 fest, wird eine Fehlersignalisierung an den Interruptcontroller 400 ausgegeben. Dieser Interruptcontroller initiiert einen Interrupt an den Recheneinheiten 210 und 220 des Paares 200, wodurch diese die Information erhalten, dass das Paar 100 einen Fehler aufweist. Ausgehend von einem solchen Interrupt wird durch das Paar 200 ein Signal ausgegeben, welches über die Kommunikationsleitung 1000 und über die Schnittstelle 1200 auf den CAN-Bus 2100 gelangt und dort zum Steuergerät 3000, um die Warneinrichtung 310 zu aktivieren.

Wie in Figur 5 dargestellt, kann die Warneinrichtung 310 aber auch an einer peripheren Einheit 1300 des Steuergerätes 2000 angeordnet sein. Auch bei dieser Ausführung wird das Paare 200, nachdem es durch den Interrupt über die Funktionsunfähigkeit des Paares 100 informiert wurde, ein Signal ausgeben, welches über die interne Kommunikationsleitung 1000 des Steuergerätes 2000 an die periphere Einheit 1300 geleitet wird, welche daraufhin die gelbe Lampe der Warneinrichtung 310 solange in Betrieb nimmt, wie der aktuelle Fahrzyklus des Fahrzeuges anhält.

Alternativ kann ein nicht weiter dargestellter Zähler, der beispielsweise im Speicher 1100 angeordnet ist, durch das fehlerfrei agierende Paar 200 erhöht werden, während nach einem erfolgreichen Hardwaretest das fehlerbehaftete Paar 100 neu gestartet wird. Erst wenn der Zählerstand des im Speicher 1100 enthaltenen Zählers einen vorgegebenen Wert erreicht hat, also mehrfach ein Vergleichsfehler in dem Paar 100 aufgetreten ist, wird die gelbe Lampe der Warneinrichtung 310 in Betrieb genommen.

Gemäß Figur 6 sind die Vergleicher 130, 230 der Paare 100, 200 mit einer zusätzlichen Hardwareeinheit 500 verbunden, welche wiederum an den Interruptcontroller 400 führt. Bei dieser Ausgestaltung erfolgt die Fehlersignalisierung mittelbar über die zusätzliche Hardwareeinheit 500, welche das Fehlersignal an den Interruptcontroller 400 zur Auslösung des Interrupts an den Recheneinheiten 210 und 220 des Paares 200 ausgibt. Auch hier hat der Interrupt die Aufgabe, die Recheneinheiten 210 und 220 darüber zu informieren, dass die Recheneinheiten 110, 120 des Paares 100 nicht ordnungsgemäß arbeiten. Das Paar 200 löst daraufhin das Signal zur Aktivierung der Warneinrichtung 310 aus.

Eine Information über die Fehlerhaftigkeit eines Paares 100, 200 kann alternativ auch über ein zyklisch zu überprüfendes Signal erfolgen.

In den Figuren 1, 5 und 6 ist ein Fehlerspeicher 1400 des Steuergerätes 2000 angeordnet, in welchem bei jeder Aktivierung der Warneinrichtung 310 ein Fehlereintrag erfolgt. Dieser Fehlereintrag ist permanent gespeichert und bleibt auch noch nach Ablauf des Fahrzyklusses, in welchem der Fehlereintrag erfolgte, vorhanden. Bei einem Neustart des Fahrzeuges wird das als defekt gekennzeichnete Paar einer Hardwareprüfung unterzogen. Wird bei dieser Hardwareprüfung kein Fehler des Paares 100 erkannt, wird das durch die Warnvorrichtung 310 auszugebende Warnsignal unterdrückt. Der Fehlereintrag kann von der Werkstatt jederzeit gelöscht werden.

Hat aber die absolute Fehlerzahl oder eine in einem bestimmten Zeitraum auftretende Fehlerzahl einen bestimmten Wert überschritten, wird unabhängig davon das Paar 200 noch fehlerfrei arbeitet, das Steuergerät 2000 permanent abgeschaltet.

## Patentansprüche

1. Verfahren zum Betreiben eines Steuergerätes, insbesondere in einem Kraftfahrzeug, mit einem Rechnersystems, welches zwei Paare (100, 200) mit jeweils zwei Ausführungseinheiten (110, 120; 210 220) aufweist, wobei die zwei Ausführungseinheiten (110, 120; 210 220) ein gleiches Programm abarbeiten und die Ausgangssignale der Ausführungseinheiten (110, 120; 210 220) eines Paares (100, 200) miteinander verglichen werden, wobei beim Auftreten einer Abweichung der Ausgangssignale der Ausführungseinheiten (110, 120; 210 220) eines Paares (100, 200) ein Fehlersignal ausgegeben wird, **dadurch gekennzeichnet, dass** beim Auftreten des Fehlersignales für ein erstes Paar (100) von Ausführungseinheiten, dieses abgeschaltet und das Rechnersystem mit dem zweiten Paar (200) von Ausführungseinheiten (210, 220) weiterbetrieben wird, wobei an den Fahrer ein Vorwarnsignal ausgegeben wird.

2. Verfahren nach Anspruch 1 **dadurch gekennzeichnet, dass** beim Auftreten von Fehlersignalen von beiden Paaren (100, 200) der Ausführungseinheiten (110, 120; 210 220) das Rechnersystem abgeschaltet wird und an den Fahrer ein Warnsignal ausgegeben wird.

3. Verfahren nach Anspruch 1 **dadurch gekennzeichnet, dass** das Vorwarnsignal während des gesamten weiteren Betriebs des Rechnersystems mit dem zweiten, noch aktiven Paar (200) von Ausführungseinheiten (210, 220) ausgegeben wird.

4. Verfahren nach Anspruch 1 oder 3 **dadurch gekennzeichnet, dass** das zweite, noch aktive Paar (200) von Ausführungseinheiten (210, 220) über den Fehler im ersten Paar (100) der Ausführungseinheiten (110, 120) informiert wird, wobei das zweite Paar (200) von Ausführungseinheiten (210,220) die Ausgabe des Vorwarnsignals initiiert.

5. Verfahren nach Anspruch 1 oder 3 **dadurch gekennzeichnet, dass** das erste Paar (100) von Ausführungseinheiten (110, 120) nach Feststellung des Fehlers getestet wird und die Ausgabe des Vorwarnsignals an den Fahrer erst erfolgt, wenn das erste Paar (100) von Ausführungseinheiten (110,120) nach der Bestätigung des Fehlers abgeschaltet wurde.

6. Verfahren nach Anspruch 1, 3 oder 4 **dadurch gekennzeichnet, dass** das Auftreten des Fehlersignals gezählt wird und das Vorwarnsignal erst ausgegeben wird, wenn eine vorgegebene Anzahl von Fehlersignalen ermittelt wurde.

7. Verfahren nach einem der vorhergehenden Ansprüche **dadurch gekennzeichnet, dass** das Fehlersignal abgespeichert wird, wobei bei einem Neustart des Rechnersystems das erste Paar (100) von Ausführungseinheiten ( 110, 120) getestet wird und beim Ausbleiben des Fehlersignales das Vorwarnsignal unterdrückt wird.

8. Verfahren nach Anspruch 7 **dadurch gekennzeichnet, dass** wenn die Anzahl der abgespeicherten Fehlersignale einen bestimmten Wert überschreiten, das Rechnersystem trotz korrekter Arbeitsweise des zweiten Paares (200) von Ausführungseinheiten (210, 220) abgeschaltet wird.

9. Vorrichtung zum Betreiben eines Steuergerätes, insbesondere in einem Kraftfahrzeug, mit einem Rechnersystems, welches zwei Paare (100, 200) mit jeweils zwei Ausführungseinheiten (110, 120; 210 220) aufweist, wobei die zwei Ausführungseinheiten (110, 210; 210 220) jedes Paares (100, 200) ein gleiches Programm abarbeiten und die Ausgangssignale jeder Ausführungseinheit (110, 120; 210 220) eines Paares (100, 200) durch je eine Vergleichseinheit (130, 230) miteinander verglichen werden, wobei beim Auftreten einer Abweichung der Ausgangssignale der Ausführungseinheiten (110, 120; 210 220) eines Paares (100, 200) von der Vergleichseinheit (130, 230) ein Fehlersignal ausgegeben wird, **dadurch gekennzeichnet, dass** Mittel (130, 230, 300, 310,400, 500) vorhanden sind, die beim Auftreten des Fehlersignals für ein erstes Paar (100) von Ausführungseinheiten (110, 120), dieses abschaltet und das Rechnersystem mit dem zweiten Paar (200) von Ausführungseinheiten (210, 220) weiter betreibt, wobei an den Fahrer ein Vorwarnsignal ausgegeben wird.

10. Vorrichtung nach Anspruch 9 **dadurch gekennzeichnet, dass** die Vergleichseinheit (130, 230) mit einer Signaleinrichtung (310) verbunden ist, welche bei Ausgabe des Fehlersignals durch die Vergleichseinheit (130, 230) aktiviert wird.

11. Vorrichtung nach Anspruch 10 **dadurch gekennzeichnet, dass** sowohl die Vergleichseinheit (130) des ersten Paares (100) als auch die Vergleichseinheit (230) des zweiten Paares (200) mit einem Halteglied (300) verbunden sind, welches auf die Signaleinrichtung (310) führt.

12. Vorrichtung nach Anspruch 10 oder 11 **dadurch gekennzeichnet, dass** die Signaleinrichtung (310) in einem zweiten Steuergerät (3000) enthalten ist, wobei das erste (100) und das zweite Paar (200) der Ausführungseinheiten (110, 120; 210 220) über eine Datenleitung (1000) mit dem zweiten Steuergerät (3000) verbunden sind und das zweite , noch aktive Paar (200) der Ausführungseinheiten (210, 220) nach einer Information über die Ausgabe eines Fehlersignals des ersten Paares (100) ein Signal zur Aktivierung der Signaleinrichtung (310) an das zweite Steuergerät (3000) sendet.

13. Vorrichtung nach Anspruch 10 oder 11 **dadurch gekennzeichnet, dass** die Signaleinrichtung (310) in einer peripheren Einheit (1300) des Rechnersystems angeordnet ist, welche über die Datenleitung (1000) mit dem ersten und dem zweiten Paar (100, 200) von Ausführungseinheiten (110, 120; 210 220) verbunden ist und das zweite , noch aktive Paar (200) von Ausführungseinheiten (210, 220) nach einer Information über die Ausgabe eines Fehlersignals des ersten Paares (100) ein Signal zur Aktivierung der Signalvorrichtung (310) an die periphere Einheit (1300) sendet.

14. Vorrichtung nach einem der vorhergehenden Ansprüche 9 bis 13 **dadurch gekennzeichnet, dass** eine einen Zähler enthaltende Speichereinheit (110) mit der Datenleitung (1000) verbunden ist, wobei bei Ausgabe des Fehlersignals durch eine der beiden Vergleichseinheiten (130, 230) der Zähler um einen bestimmten Wert inkrementiert wird und erst beim Erreichen eines vorgegebenen Zählerwertes die Signaleinrichtung (310) durch den Zähler aktiviert wird.

15. Vorrichtung nach Anspruch 13 oder 14 **dadurch gekennzeichnet, dass** ein Fehlerspeicher (1400) des Steuergerätes (2000) über die Datenleitung (1000) mit dem ersten und dem zweiten Paar (100, 200) der Ausführungseinheiten (110, 120; 210 220) verbunden ist, in welchen bei jeder Aktivierung der Signaleinrichtung (310) ein Eintrag vorgenommen wird.

16. Vorrichtung nach Anspruch 15 **dadurch gekennzeichnet, dass** bei Überschreitung der Anzahl der Fehlereinträge in dem Fehlerspeicher (1400), das Steuergerät (2000) permanent abgeschaltet wird.
